# EUROPÄISCHE PATENTSCHRIFT

(11) **EP 1 586 755 B1**
(45) Veröffentlichungstag und Bekanntmachung des Hinweises auf die Patenterteilung: **04.01.2012**
(21) Anmeldenummer: 05000763.2
(22) Anmeldetag: 15.01.2005
(51) Int. Cl.: F02B 29/04

(54) **Ladeluftkühler**
Supercharged air cooler
Refroidisseur d'air de suralimentation

(30) Priorität: 14.04.2004 DE 102004018000
(43) Veröffentlichungstag der Anmeldung: 19.10.2005
(73) Patentinhaber: Dr. Ing. h.c. F. Porsche AG, 70435 Stuttgart (DE)
(72) Erfinder: Storz, Eberhard, 74366 Kirchheim (DE)

(56) Entgegenhaltungen:
- EP-A- 0 956 991
- GB-A- 2 375 388
- US-A- 5 095 882
- US-A1- 2003 037 913

## Beschreibung

Die Erfindung bezieht sich auf einen Ladeluftkühler nach dem Oberbegriff des Patentanspruchs 1.

Aus der EP 0 584 994 B1 ist ein Wärmetauscher bekannt, der zwei Wasserkastenteile mit Schlitzen zur Aufnahme eines zwischengesetzten aus Rohren bestehenden Wärmetauschers umfasst. Aus der GB-2375388 A ist auch ein Ladeluftkühler bekannt, der zwei Halbschalen aufweist.

Aufgabe der Erfindung ist es, einen Ladeluftkühler zu schaffen, der einfach herzustellen ist und eine druckfeste und drucksteife Baueinheit bildet, die unempfindlich gegen Schwingungen ist.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, dass ein Ladeluftkühler in einfacher Weise durch wenig zusammenfügbare Teile, wie einem zweiteiligen Rahmen und einem Ladeluftkühlerblock herstellbar ist. Insbesondere besteht der Ladeluftkühler aus einem Kühlerrahmen mit zwei Halbschalen, zwischen denen ein Ladeluftkühlerblock eingebettet gehalten ist. Jede Halbschale weist ein Teilelement des Zu- und Abluftkastens auf und zumindestens ein Teilelement des Zu- und Abluftkastens besitzt einen rohrförmigen Luftein- bzw. auslass. Die Halbschalen des Kühlerrahmens weisen zwei Seitenteile mit den ober- und unterseitig verbindenden Teilelementen des Zu- und Abluftkastens auf und in den Seitenteilen und/oder in den Teilelementen ist eine Aufnahme für den Ladeluftkühlerblock vorgesehen. Durch diese einfache Ausbildung des Kühlerrahmens aus zwei Halbschalen, die aus Kunststoff oder aus einem Leichtmetall bestehen könnten, ist zum einen die Herstellung des Kühlerrahmens vereinfacht und zum anderen kann eine passgenaue Herstellung mit geringen Einbautoleranzen erfolgen, derart, dass der Ladeluftkühlerblock mit seinem Rohrbündel in genauer Weise zwischen die Halbschalen einsetzbar ist. Damit die genaue Einbaulage des Ladeluftkühlerblocks zwischen den beiden Halbschalen gewährleistet ist, sind am inneren Rand des Zu- und Abluftkastens Anlageflächen vorgesehen, die als Lötflächen ausgeführt sind und an welche die gebündelte Rohre des Ladeluftkühlerblocks oder ein die Rohre umgebender Boden anliegend sind.

Vorzugsweise sind die zu einer Baueinheit gebündelten Rohre des Ladeluftkühlerblocks endseitig im Querschnitt rechteckförmig ausgebildet und bilden eine flächige Anlage zum Boden, der in der Aufnahme der Zu- und Abluftkästen angeordnet ist.

Des Weiteren ist in vorteilhafter Weise nach der Erfindung vorgesehen, dass die gebündelten Rohre des Ladeluftkühlerblocks über eine umlaufende Dichtung oder eine Hinterspritzung in Aufnahmen der Seitenteile und/oder der Teilelemente abgedichtet angeordnet sind.

Nach dem Einsetzen des Ladeluftkühlerblocks zwischen die Halbschalen mit den entsprechenden Abdichtungen werden die beiden Halbschalen des Kühlerrahmens mittels einer Lötung oder Schweißung miteinander verbunden.

Durch die kompakte quasi einteilige Bauweise des Ladeluftkühlers ist der Ladeluftkühler gegen Schwingungen bzw. Anregungen von außen relativ unempfindlich.

Ein Ausführungsbeispiel der Erfindung ist in den Zeichnungen dargestellt und wird im Folgenden näher beschrieben.

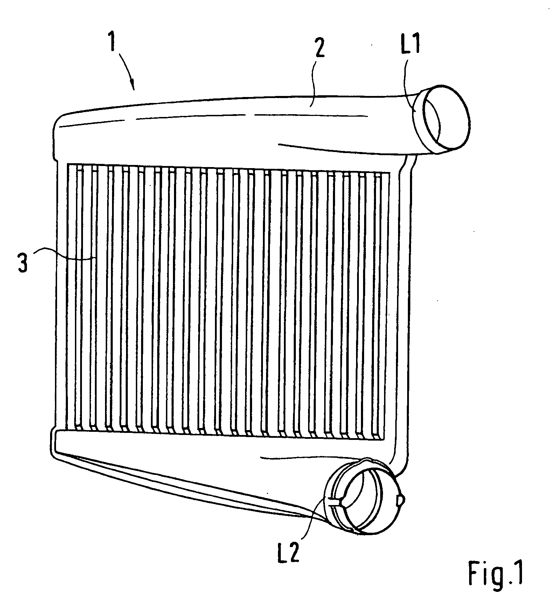

Es zeigen
- Fig. 1: eine schaubildliche Darstellung eines in einem Kühlerrahmen gehaltenen Ladeluftkühlerblock,

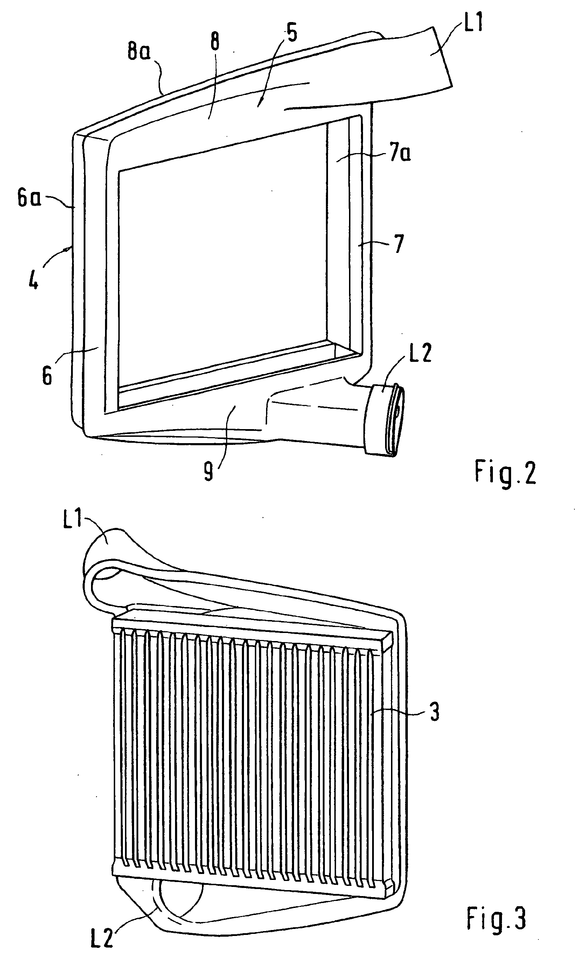

- Fig. 2: eine schaubildliche Darstellung des Kühlerrahmens mit Zu- und Abluftkasten,
- Fig. 3: eine Ansicht auf eine Halbschale des Kühlerrahmens mit eingesetztem Ladeluftkühlerblock,
- Fig. 4: eine Ansicht auf eine Halbschale des Kühlerrahmens von innen auf eine Aufnahme für den Ladeluftkühlerblock,
- Fig. 5: eine Ansicht auf den Ladeluftkühlerblock aus gebündelten Rohren mit endseitigen Böden,
- Fig. 6: eine Ansicht auf eine umlaufende Dichtung des Ladeluftkühlerblocks, und
- Fig. 7: eine Ansicht auf eine Halbschale des Kühlerrahmens, die mit der Halbschale gem. Fig. 4 zusammensetzbar ist.

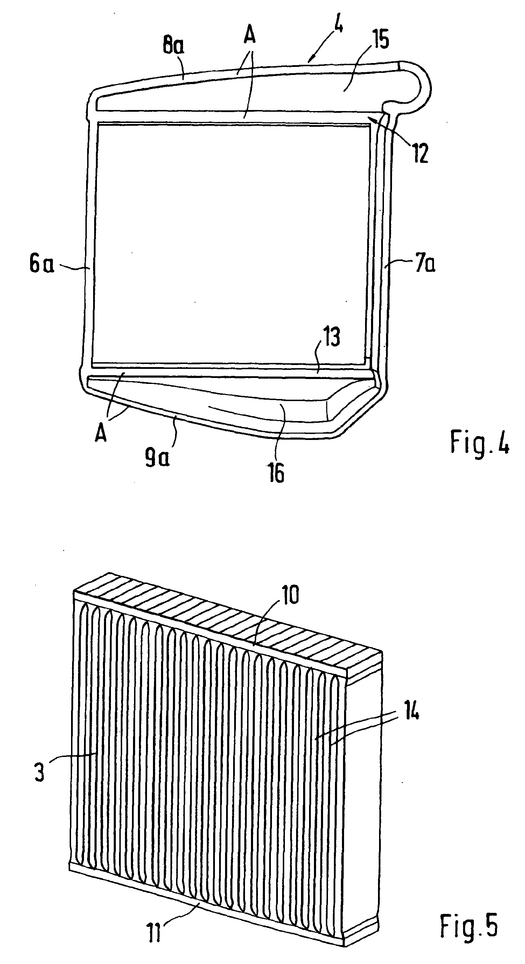

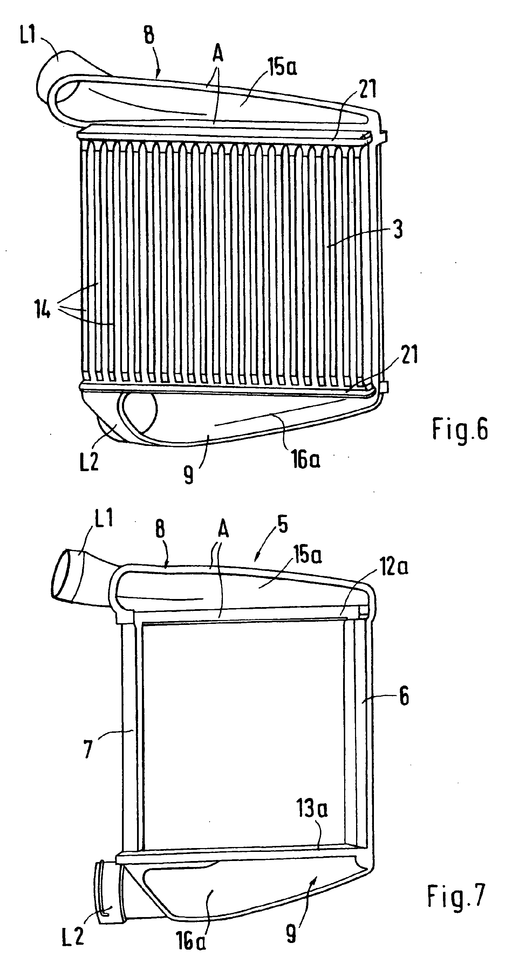

Ein Ladeluftkühler 1 für ein Kraftfahrzeug umfasst in einem Kühlerrahmen 2 einen Ladeluftkühlerblock 3. Der Kühlerrahmen 2 besteht im Wesentlichen aus zwei Halbschalen 4 und 5 (Fig. 4 und Fig. 7), die jeweils aus zwei Seitenteilen 6, 7 bzw. 6a, 7a und die jeweils aus diese Seitenteile miteinander verbindende Teilelemente 8, 9 bzw. 8a, 9a bestehen, welche einen oberen Zuluftkasten und einen unteren Abluftkasten oder umgekehrt bilden.

Die beiden Halbschalen 4 und 5 nehmen zwischen sich den Ladeluftkühlerblock 3 auf, der oben- und unterseitig mit seinem Boden 10, 11 an Aufnahmeflächen 12, 13 bzw. 12a, 13a anliegt. In dem gezeigten Ausführungsbeispiel sind die Rohre 14 des Ladeluftkühlerblocks 3 im Querschnitt rechteckförmig ausgeführt, so dass sich plane Anlageflächen an den Seitenteilen 6, 7 bzw. 6a, 7a ergeben.

Wie aus Fig. 4 näher zu erkennen ist, weist der Zuluftkasten 8a (Teilelement) der Halbschale 4 einen nach innen offenen Luftführungskanal 15 und der untere Abluftkasten (Teilelement 9a) einen weiteren nach innen offenen Ladeluftkanal 16 auf. Die weitere Halbschale 5, welche zum Verbinden gegen die Halbschale 4 gesetzt wird, weist dagegen eine zum offenen Luftführungskanal 15 und 16 korrespondierenden Luftführungskanal 15a und 16a auf, die über gegenüberliegende Anlageflächen A dicht abschließbar miteinander verbindbar sind. An den Luftführungskanal 15a und 16a sind rohrförmige Lufteinlässe L1 und L2 angeformt.

Die Halbschalen 4, 5 können aus einem Kunststoff oder einem Leichtmetall bzw. aus einer Aluminiumlegierung bestehen, so dass entsprechend dieser Werkstoffe eine Verbindung der Böden 10, 11 des Ladeluftkühlerblocks 3 mit den Halbschalen 4 und 5 erfolgt.

Bei einem Metallrahmen kann eine Lötung auf der Aufnahmefläche 12, 13 bzw. 12a, 13a und bei einem Kunststoffrahmen eine elastische Dichtung 21 bzw. eine Flüssigkeitsdichtung verwendet werden. Auch ist ein Hinterspritzen der Dichtung 21 nach dem Fügen noch möglich. Die Verbindung der Halbschalen 4, 5 erfolgt bei einem Metallrahmen mittels einer Lötung oder einem entsprechenden Verbindungsverfahren und bei einem Kunststoffrahmen über eine Schweißung oder einem entsprechenden Verbindungsverfahren für Kunststoffe.

## Patentansprüche

1. Ladeluftkühler mit einem Kühlerrahmen sowie mit diesem verbundenen Zu- und Abluftkühlerkästen, die einen rohrförmigen Luftein- bzw. auslass aufweisen, wobei der Kühlerrahmen (2) zwei Halbschalen (4, 5) umfasst, zwischen denen ein Ladeluftkühlerblock (3) eingebettet gehalten ist, **dadurch gekennzeichnet, dass** jede Halbschale (4, 5) ein Teilelement (8, 9) bzw. (8a, 9a) des Zu- und Abluftkastens aufweist und zumindestens ein Teilelement (8 oder 9) bzw. (8a oder 9a) des Zu- und Abluftkastens den rohrförmigen Luftein- bzw. auslass (L1, L2) besitzt.

2. Ladeluftkühler nach Anspruch 1, **dadurch gekennzeichnet, dass** die Halbschalen (4, 5) des Kühlerrahmens (2) zwei Seitenteile (6, 7) bzw. (6a, 7a) mit den ober- und unterseitig verbindenden Teilelementen (8, 9) bzw. (8a, 9a) des Zu- und Abluftkastens aufweist und in den Seitenteilen (6, 7) bzw. (6a, 7a) und/oder in den Teilelementen (8, 9) bzw. (8a, 9a) Aufnahmen (12, 13) bzw. (12a, 13a) für den Ladeluftkühlerblock (3) vorgesehen sind.

3. Ladeluftkühler nach den Ansprüchen 1 oder 2, **dadurch gekennzeichnet, dass** die Zu- und Abluftkästen zumindest am inneren Rand eine Anlagefläche (A), die als Lötfläche ausgeführt ist, aufweist, und an welcher gebündelte Rohre (14) des Ladeluftkühlerblocks (3) oder ein die Rohre (14) umgebender Boden (10, 11) anliegend sind.

4. Ladeluftkühler nach den Ansprüchen 1, 2 oder 3, **dadurch gekennzeichnet, dass** die Halbschalen (4, 5) des Kühlerrahmens (2) aus Kunststoff oder aus einem Leichtmetall bestehen.

5. Ladeluftkühler nach einem der vorhergehenden Ansprüche, **dadurch gekennzeichnet, dass** die gebündelten Rohre (14) des Ladeluftkühlerblocks (3) über eine umlaufende Dichtung (21) und/oder einer Hinterspritzung in den Aufnahmen (A) der Seitenteile (6, 7 bzw. 6a, 7a) und/oder der Teilelemente (8, 9) bzw. (8a, 9a) abgedichtet angeordnet sind.

6. Ladeluftkühler nach einem der vorhergehenden Ansprüche, **dadurch gekennzeichnet, dass** die beiden Halbschalen (4, 5) des Kühlerrahmens (2) mittels einer Lötung oder Schweißung miteinander verbindbar sind.

7. Ladeluftkühler nach einem der vorhergehenden Ansprüche, **dadurch gekennzeichnet, dass** die zu einer Baueinheit gebündelten Rohre (14) des Ladeluftkühlerblocks (3) endseitig im Querschnitt rechteckförmig ausgebildet sind und eine flächige Anlage zum Boden (10, 11) bilden, der in den Aufnahmen (12, 13 bzw. 12a, 13a) der Abluftkästen (Teilelemente 8, 9 bzw. 8a, 9a) angeordnet sind.

## Claims

1. Charge air cooler with a cooler frame and with supply-air and exhaust-air cooler boxes which are connected to the latter and have respectively a tubular air inlet and air outlet, the cooler frame (2) comprising two half-shells (4, 5), between which a charge air cooler block (3) is held, embedded, **characterized in that** each half-shell (4, 5) has a subelement (8, 9) and (8a, 9a) of the supply-air and exhaust-air box, and at least one subelement (8 or 9) and (8a or 9a) of the supply-air and exhaust-air box possesses the tubular air inlet or air outlet (L1, L2).

2. Charge air cooler according to Claim 1, **characterized in that** the half-shells (4, 5) of the cooler frame (2) have two side parts (6, 7) and (6a, 7a) with the subelements (8, 9) and (8a, 9a), connecting on the top side and on the bottom side, of the supply-air and exhaust-air box, and receptacles (12, 13) and (12a, 13a) for the charge air cooler block (3) are provided in the side parts (6, 7) and (6a, 7a) and/or in the subelements (8, 9) and (8a, 9a).

3. Charge air cooler according to either one of Claims 1 and 2, **characterized in that** the supply-air and exhaust-air boxes have, at least at the inner margin, a bearing face (A) which is designed as a soldering face and to which bundled tubes (14) of the charge air cooler block (3) or a bottom (10, 11) surrounding the tubes (14) are contiguous.

4. Charge air cooler according to Claim 1, 2 or 3, **characterized in that** the half-shells (4, 5) of the cooler frame (2) consist of plastic or of a light metal.

5. Charge air cooler according to one of the preceding claims, **characterized in that** the bundled tubes (14) of the charge air cooler block (3) are arranged, sealed off, in receptacles (A) of the side parts (6, 7 and 6a, 7a) and/or of the subelements (8, 9) and (8a, 9a) via a continuous seal (21) and/or an injected back moulding.

6. Charge air cooler according to one of the preceding claims, **characterized in that** the two half-shells (4, 5) of the cooler frame (2) are connectable to one another by means of a solder or a weld.

7. Charge air cooler according to one of the preceding claims, **characterized in that** the tubes (14) of the charge air cooler block (3) which are bundled to form a structural unit are of rectangular design in cross section at the ends and form sheet-like bedding contact with the bottom (10, 11) arranged in the receptacles (12, 13 and 12a, 13a) of the exhaust-air boxes (subelements 8, 9 and 8a, 9a).

## Revendications

1. Refroidisseur d'air de suralimentation doté d'un bâti de refroidisseur auquel sont reliés un caisson pour l'air entrant et un caisson l'air sortant du refroidisseur, les caissons présentant un orifice d'entrée d'air ou un orifice de sortie d'air de forme tubulaire,
le bâti (2) du refroidisseur comportant deux demi-coquilles (4, 5) entre lesquelles un bloc (3) de refroidisseur d'air de suralimentation est incorporé, **caractérisé en ce que**
chaque demi-coquille (4, 5) présente un élément partiel (8, 9) ou (8a, 9a) du caisson d'amenée d'air ou du caisson d'évacuation d'air et au moins un élément partiel (8 ou 9) ou (8a ou 9a) du caisson d'amenée d'air ou du caisson d'évacuation d'air possède l'orifice tubulaire d'entrée d'air ou de sortie d'air (L1, L2).

2. Refroidisseur d'air de suralimentation selon la revendication 1, **caractérisé en ce que** les demi-coquilles (4, 5) du bâti (2) du refroidisseur présentent deux parties latérales (6, 7) ou (6a, 7a) qui présentent les éléments partiels (8, 9) ou (8a, 9a) qui relient le côté supérieur ou le côté inférieur du caisson d'amenée et d'évacuation d'air, des logements (12, 13) ou (12a, 13a) pour le bloc (3) de refroidisseur d'air de suralimentation étant prévus dans les parties latérales (6, 7) ou (6a, 7a) et/ou dans les éléments partiels (8, 9) ou (8a, 9a).

3. Refroidisseur d'air de suralimentation selon les revendications 1 ou 2, **caractérisé en ce que** le caisson d'amenée et le caisson d'évacuation d'air présentent au moins sur le bord intérieur une surface de pose (A) réalisée sous la forme d'une surface brasée et sur laquelle reposent des faisceaux de tubes (14) du bloc (3) de refroidisseur d'air de suralimentation ou un fond (10, 11) qui entoure les tubes (14).

4. Refroidisseur d'air de suralimentation selon les revendications 1, 2 ou 3, **caractérisé en ce que** les demi-coquilles (4, 5) du bâti (2) du refroidisseur sont constituées de matière synthétique ou d'un métal léger.

5. Refroidisseur d'air de suralimentation selon l'une des revendications précédentes, **caractérisé en ce que** les tubes (14) rassemblés en faisceau du bloc (3) de refroidisseur d'air de suralimentation sont disposés de manière étanche dans les logements (A) des parties latérales (6, 7) ou (6a, 7a) et/ou des éléments partiels (8, 9) ou (8a, 9a), l'étanchéité étant obtenue par un joint d'étanchéité périphérique (21) et/ou une rétroinjection.

6. Refroidisseur d'air de suralimentation selon l'une des revendications précédentes, **caractérisé en ce que** les deux demi-coquilles (4, 5) du bâti (2) du refroidisseur peuvent être reliées l'une à l'autre par brasage ou soudage.

7. Refroidisseur d'air de suralimentation selon l'une des revendications précédentes, **caractérisé en ce que** les tubes (14), rassemblés en un module, du bloc (3) du refroidisseur d'air de suralimentation ont à leur extrémité une section transversale rectangulaire, forment un appui plat sur le fond (10, 11) et sont disposés dans les logements (12, 13) ou (12a, 13a) des caissons d'évacuation d'air (éléments partiels 8, 9 ou 8a, 9a).
